(19) Europäisches Patentamt
European Patent Office
Office européen des brevets

(11) EP 0 797 539 B1

(12) **FASCICULE DE BREVET EUROPEEN**

(45) Date de publication et mention de la délivrance du brevet:
**26.01.2000 Bulletin 2000/04**

(21) Numéro de dépôt: **95930567.3**

(22) Date de dépôt: **11.09.1995**

(51) Int Cl.[7]: **C01B 21/082**, G01N 27/12

(86) Numéro de dépôt international:
**PCT/FR95/01160**

(87) Numéro de publication internationale:
**WO 96/08443 (21.03.1996 Gazette 1996/13)**

(54) **OXYNITRURES DE GERMANIUM ET DE CADMIUM, LEVR PREPARATION, AINSI QUE LEURS APPLICATIONS COMME CAPTEURS DE GAZ ET CATALYSEURS**

GERMANIUM UND CADMIUM OXYNITRIDE, IHRE HERSTELLUNG, SOWIE DESSEN VERWENDUNG ALS GASSENSOREN UND KATALYSATOREN

GERMANIUM AND CADMIUM OXINITRIDES, THEIR PREPARATION, AND THEIR APPLICATIONS AS GAS COLLECTORS AND CATALYSTS

(84) Etats contractants désignés:
**AT BE CH DE DK ES FR GB GR IE IT LI LU MC NL PT SE**

(30) Priorité: **12.09.1994 FR 9410841**

(43) Date de publication de la demande:
**01.10.1997 Bulletin 1997/40**

(73) Titulaire: **Cernix**
**35235 Thorigne-Fouillard (FR)**

(72) Inventeurs:
- **LOUIS E. dit PICARD, Céline**
  **F-50220 Saint-Quentin/Le Homme (FR)**
- **MERDRIGNAC, Odile**
  **F-35700 Rennes (FR)**
- **GUYADER, Jean**
  **F-35690 Acigné (FR)**
- **VERDIER, Patrick**
  **F-35690 Acigné (FR)**
- **LAURENT, Yves**
  **F-35235 Thorigné-Fouillard (FR)**
- **RAZAFINDRAKOTO, John**
  **F-35235 Thorigné-Fouillard (FR)**

(74) Mandataire: **Ahner, Francis**
**CABINET REGIMBEAU**
**26, avenue Kléber**
**75116 Paris (FR)**

(56) Documents cités:
**EP-A- 0 184 951**
**FR-A- 2 579 754**
**FR-A- 2 594 109**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention a pour objet des composés à base d'oxynitrure de germanium et de cadmium ainsi que leurs dérivés de substitution partielle conservant la même structure cristallographique, ainsi que leurs utilisations en tant que capteurs de gaz ou catalyseurs remplaçant notamment l'oxyde de zinc.

Elle a également pour objet un procédé de préparation de tels oxynitrures de germanium et de cadmium.

Les oxynitrures de germanium et de zinc, de même que les oxynitrures de gallium, peuvent être utilisés comme capteurs de gaz (D. Jamois, thèse de l'Université de Rennes, 1992).

Toutefois, la résistance de ces capteurs dans l'air est encore élevée, de l'ordre de $10^9$ Ω. C'est également le cas de leur résistance dans les gaz inertes ($N_2$, $CH_4$, Ar, etc.) qui est de l'ordre de $10^7$ Ω. De ce fait leur utilisation à grande échelle, à faible coût, n'est pas envisageable avec les moyens électroniques actuels.

L'invention a pour but de proposer de nouveaux composés permettant de pallier les inconvénients mentionnés ci-dessus et propose en particulier des composés dont la résistance est très nettement diminuée, ce qui permet d'envisager de nombreuses applications industrielles.

L'invention concerne en premier lieu l'oxynitrure de germanium et de cadmium. Les oxynitrures de germanium et de cadmium sont en général non stoechiométriques et présentent des variations de composition à la fois sur le sous-réseau cationique et sur le sous-réseau anionique.

Les oxynitrures de germanium et de cadmium selon l'invention sont de préférence ceux présentant une surface spécifique comprise entre 10 $m^2$/g et 30 $m^2$/g.

Plusieurs autres paramètres physiques de ces composés relatifs à la conductivité et à la sensibilité de cette conductivité en présence d'un gaz polluant, tel qu'un de ceux mentionnés ci-dessus, sont également importants.

De préférence, la conductivité du composé d'oxynitrure de germanium et de cadmium est supérieure à celle de l'oxynitrure de zinc et de germanium d'un facteur d'au moins 10, de préférence d'au moins 100 notamment dans l'air ou dans un gaz inerte à + 200°C.

Avantageusement, cette conductance est de l'ordre de $10^{-6}$ $\Omega^{-1}$ dans l'air et de l'ordre de $10^{-4}$ $\Omega^{-1}$ dans un gaz inerte.

La sensibilité de ces composés en fonction de la concentration en gaz polluant notamment réducteur est comparable à celle de l'oxynitrure de zinc et de germanium. Cette sensibilité sera décrite ci-après.

La présente invention concerne de façon plus générale les oxynitrures de germanium et de cadmium ainsi que leurs dérivés de même structure cristallographique dans lesquels le cadmium et/ou le germanium ont été partiellement substitués respectivement par le zinc ou le manganèse d'une part, et l'étain d'autre part. Tous ces composés présentent généralement une structure tétraédrique dérivée de celle de la würtzite. Ils possèdent en général une concentration en électrons de valence supérieure à 4, de préférence supérieure à environ 4,2.

Selon un mode de réalisation préféré, les oxynitrures selon l'invention répondent aux formules :

$$\text{(I)} \qquad Cd_{2-x-\alpha}\, Zn_{\alpha}\, Ge_{1-\beta}\, Sn_{\beta}\, O_{4-x-3y}\, N_{2y}$$

ou

$$\text{(II)} \qquad Cd_{2-x-\alpha}\, Mn_{\alpha}\, Ge_{1-\beta}\, Sn_{\beta}\, O_{4-x-3y}\, N_{2y}$$

dans lesquelles :
$0,9 \le x \le 1,5$
$0,3 \le y \le 0,7$
$0 \le \alpha \le 0,5$
$0 \le \beta \le 0,5$

Les indices x et α ne pouvant pas prendre simultanément leur valeur maximale de 1,5 et de 0,5 respectivement.

L'invention a également pour objet l'utilisation des oxynitrures de germanium et de cadmium ainsi que leurs dérivés comme capteurs de gaz, notamment réducteurs comme $H_2S$, l'ammoniac, les gaz aminés, les mercaptans. Il est important d'observer ici que les capteurs de gaz selon l'invention fonctionnent indifféremment en présence ou en l'absence d'air. Il est remarquable de noter qu'ils sont notamment utiles pour déceler la présence de gaz réducteurs dans des atmosphères gazeuses inertes, par exemple dans $CH_4$ ou $N_2$.

Enfin, les oxynitrures selon l'invention trouvent généralement leur application comme capteurs de gaz oxydants, en particulier des différents oxydes d'azote $NO_x$.

Pour de telles applications, les composés sont généralement déposés sur un substrat par sérigraphie, notamment sur de l'alumine. Le capteur est pourvu d'un moyen de chauffage, par exemple une piste conductrice de platine déposée sur une face, et d'électrodes sérigraphiées. L'épaisseur du dépôt d'oxynitrure de cadmium et de germanium est généralement de quelques dizaines de microns.

Les oxydes de germanium et de cadmium, ainsi que leurs dérivés, sont tels qu'à environ 200°C ils présentent une sensibilité significative mesurée par la variation de la conductance pour une dose d'$H_2S$ aussi faible que 1 ppm. Normalement, les mesures seront effectuées entre 150 et 250°C.

Il convient de relever ici qu'en opérant à environ 150°C, on donne une vitesse de réponse plus lente qu'à 200°C. En revanche, à environ 250°C, on observe une plus forte désorption, mais également une plus faible sensibilité. Les températures d'utilisation des capteurs seront donc choisies en fonction des applications particulières envisagées.

Les oxynitrures de germanium et de cadmium selon l'invention sont de préférence tels que pour une dose de 10 ppm d'$H_2S$, à 200°C, la variation de conductance est d'au moins 1000 %.

L'invention a également pour objet l'utilisation des oxynitrures de germanium et de cadmium et leurs dérivés, comme catalyseurs remplaçant avantageusement l'oxyde de zinc pour renforcer le caractère basique.

L'invention concerne également un procédé de préparation d'oxynitrure de germanium et de cadmium tout comme de leurs dérivés décrits précédemment.

Dans le cas de l'oxynitrure de germanium et de cadmium, le procédé est caractérisé en ce que :

a) on prépare par la voie sol-gel un germanate de cadmium amorphe,
b) on soumet ledit germanate de cadmium à une réaction de nitruration.

La nitruration d'un germanate de cadmium obtenu par la méthode classique sous forme cristalline ne conduit en aucun cas à l'oxynitrure souhaité. En effet, la réaction solide-solide de l'oxyde de cadmium CdO avec $GeO_2$, fournit le composé cristallisé $Cd_2\ GeO_4$, qui reste stable sous l'action de l'ammoniac. La substitution oxygène-azote n'a pas lieu.

De façon inattendue, l'utilisation du procédé sol-gel pour la préparation des germanates de cadmium conduit aux oxynitrures de cadmium et de germanium selon l'invention.

Le précurseur est un hydroxyde double de cadmium et de germanium obtenu par coprécipitation en milieux aqueux.

On mélange pour cela une solution acide d'oxyde de cadmium, avec une solution d'oxyde de germanium à l'état d'acide monogermanique $H_2GeO_3$ partiellement dissocié.

De préférence, la proportion molaire d'ions cadmium par rapport aux ions germanium est supérieure à 2, de façon à obtenir un précurseur dont le rapport molaire Cd/Ge est supérieur ou égal à 2.

Pratiquement, la voie de synthèse consiste à additionner à une solution acide (avantageusement à un pH voisin de 1) contenant les espèces $Cd^{2+}$ et $H_2GeO_3$, une solution concentrée ammoniacale jusqu'à un pH basique.

$$2Cd^{2+} + H_2GeO_3 + H_2O + 4NH_3 \rightarrow \underset{\downarrow}{Cd_2GeO_4\ (\text{aqueux})} + 4NH_4^+$$

L'oxyde hydraté obtenu ne se présente pas sous la forme cristalline de $Cd_2GeO_4$ cristallisé, comme c'est le cas pour la préparation classique des germanates de zinc.

Ce procédé permet d'obtenir une poudre amorphe monodispersé de morphologie contrôlée, dont les grains sont de forme régulière et même sphérique. Ce procédé permet également de maîtriser l'état d'agglomération de la poudre.

La formule de ce précurseur est voisine de $Cd_2GeO_4$. Les surfaces spécifiques sont avantageusement de l'ordre de 70 à 90 $m^2/g$ dans les conditions de température et de pH de précipitation utilisées et avec $Cd/Ge \geq 2$.

Afin de mettre en oeuvre le procédé de façon optimale, il est nécessaire de contrôler les paramètres de précipitation, les étapes de lavage et de séchage du précipité. En ce qui concerne les conditions de précipitation, la taille des cristallites formés est le résultat de deux processus : une étape de germination suivie d'une étape de croissance. Pour obtenir une poudre monodisperse, ces deux étapes ne doivent pas se superposer.

Les conditions de précipitation doivent être atteintes rapidement et de façon homogène en tout point de la solution.

Pour obtenir les cristallites les plus fins, il faut que le nombre de germes formés soit très élevé et que l'étape de croissance soit limitée.

La germination est favorisée par une température élevée de la solution, de préférence entre 70 et 95°C, avantageusement de l'ordre de 90°C, une forte concentration des réactifs, des pH élevés entre 6 et 7 et l'utilisation de solvants à constante diélectrique faible. La solubilité des sels diminue en effet avec la constante diélectrique du milieu.

La durée de précipitation est également courte, de l'ordre de 1 minute. En général, l'augmentation de la température de réaction favorise l'étape de germination. Un pH supérieur à 7 conduit à la peptisation du précipité.

La concentration en germanium ne doit néanmoins pas dépasser 0,05 mole/l, car au-delà de cette concentration il apparaît des traces d'oxyde de germanium dans le produit final.

La précipitation est effectuée par addition d'ammoniaque jusqu'à un pH supérieur à environ 5.

Selon un mode de réalisation avantageux, la solution contenant l'ion $Cd^{2+}$ est réalisée par dissolution de l'oxyde de cadmium dans l'eau distillée et une solution aqueuse d'HCl concentré. Par exemple 400 cc d'eau distillée et 20 cc d'HCl concentré.

La solution de l'ion germanium est préparée par dissolution de l'oxyde de germanium $GeO_2$ dans 1,5 l d'eau distillée, puis filtration éventuelle pour éliminer la phase $GeO_2$ rutile insoluble.

La concentration en germanium est avantageusement comprise entre 0,01 et 0,04 mole/l, de préférence de l'ordre de 0,02 mole/l.

La précipitation est effectuée par addition de 25 ml d'ammoniaque concentré.

De préférence, afin d'obtenir la surface spécifique de l'ordre de 70 à 90 $m^2/g$, le rapport molaire initial Cd/Ge est supérieur à 2 environ.

Les valeurs de surface spécifique augmentent avec le taux initial de cadmium présent en solution.

On a déjà indiqué qu'il était essentiel d'utiliser un excès molaire d'un facteur au moins égal à 2 de Cd par rapport à Ge. Toutefois, comme la réaction est incomplète, il est avantageux d'ajouter les ions $Cd^{2+}$ en excès d'environ 5 % par rapport à ce facteur 2, soit 2,1.

L'étape de lavage est donc nécessaire dans la plupart des cas pour éliminer les traces d'ions cadmium ainsi que les ions étrangers introduits durant la mise en solution et la précipitation tels que $Cl^-$, $NH_4^+$.

L'étape de lavage est effectuée de façon usuelle, Les gels obtenus après centrifugation sont séchés à l'étuve.

La poudre obtenue a un taux d'humidité résiduel, généralement entre 5 et 10 %. La pureté est vérifiée par diffraction des rayons X après calcination à 600°C.

Pour obtenir les autres dérivés de substitution selon l'invention, on met en oeuvre un procédé identique à celui précédemment décrit, à la différence toutefois que l'on ajoute au milieu réactionnel les composés additionnels dans les proportions adéquates, pour atteindre le degré de substitution souhaité.

C'est ainsi que l'on ajoutera en plus de la solution acide d'oxyde de cadmium de départ, un sel de zinc ou de manganèse, par exemple un nitrate, dans la proportion molaire a souhaitée.

De même, pour conduire à une substitution partielle du germanium par l'étain, la solution réactionnelle de départ sera préparée à partir d'un mélange d'oxyde $GeO_2$ et $SnO_2$ dans la proportion molaire $\beta$ souhaitée.

L'invention a également pour objet le germanate de cadmium amorphe, éventuellement partiellement substitué par Zn ou Mn et/ou par Sn, utile notamment pour la préparation d'oxynitrure de germanium et de cadmium de forme CdGeON. De préférence, le germanate de cadmium contient un large excès de cadmium.

Avantageusement, le rapport molaire Cd/Ge est supérieur à 2.

L'invention a pour objet les germanates de cadmium amorphes répondant aux diagrammes en annexe de RX de la poudre obtenue après séchage non calcinée, respectivement Cd/Ge = 1 ou 2 ou 3 (figure 1).

La réaction de nitruration du germanate de cadmium est réalisée sous courant d'ammoniac et est du type solide gaz.

Elle peut être réalisée avantageusement dans un four tubulaire horizontal.

Selon un mode de réalisation, le précurseur, disposé dans une nacelle est amené en palier de température suivant un profil déterminé et un débit gazeux contrôlé. Le débit doit être réglé de façon à ce que la dissociation de l'ammoniac en azote et hydrogène se produise dans la zone isotherme où se situe l'échantillon.

Les conditions de réaction doivent à la fois :

- permettre une élimination rapide de l'eau qui est souvent donnée responsable d'un phénomène de frittage de la poudre. Celle-ci a deux origines: eau de constitution du précurseur et eau formée lors de la réaction de nitruration elle-même.

$$\text{Phase oxyde} + NH_3 \rightarrow \text{Phase nitrure} + H_2O,$$

- empêcher la réaction de cristallisation de l'oxyde double $Cd_2GeO_4$, lequel ne peut pas conduire à une phase oxynitrure dans les conditions choisies.

La réaction de nitruration de $Cd_2GeO_4$ amorphe nécessite le contrôle de nombreux paramètres tels que la durée, la température, le débit gazeux, la disposition de la poudre de $Cd_2GeO_4$ dans la zone isotherme ou le choix du précurseur de nitruration.

Ces paramètres doivent être réglés par l'homme du métier de manière à éviter ou à limiter au maximum l'apparition de la phase $GeO_2$ ou de l'oxyde double $Cd_2GeO_4$ cristallisé.
De préférence, le débit d'ammoniac sera choisi pour atteindre une vitesse spatiale horaire de l'ordre de 40 $m.h^{-1}$, afin d'éviter l'apparition de la phase $GeO_2$.
Le refroidissement s'effectue selon l'inertie thermique du four.
Cette nitruration s'accompagne d'un départ important de cadmium métallique. Il est donc nécessaire d'utiliser un précurseur de nitruration contenant un large excès de cadmium (rapport molaire initial Cd/Ge > 2), de façon à obtenir la phase CdGeON pure.
L'utilisation d'un précurseur de rapport molaire Cd/Ge < 2 entraîne l'apparition d'impuretés de $GeO_2$, et la phase CdGeON pure s'obtient plus difficilement.
Les oxynitrures obtenus sont de couleur marron, sont non stoechiométriques et présentent des variations de composition à la fois sur le sous réseau cationique et sur le sous réseau anionique.
La réaction globale de nitruration pour un rapport Cd/Ge = 2 peut s'écrire :

$$Cd_2GeO_4 + (2x/3+2\,y)\,NH_3 \rightarrow Cd_{2-X}GeO_{4-X-3y}N_{2y} + x\,Cd\uparrow + x/3\,N_2\uparrow + (x+3\,y)H_2O\uparrow$$

Les composés d'oxynitrures de cadmium et de germanium sont généralement purs mais peuvent contenir des quantités mineures d'impuretés du type $GeO_2$.
On peut citer avantageusement ceux répondant aux diagrammes de diffraction en annexe (figure 2) respectivement :

- le composé A pur, de formule :

$$Cd_{0,94}\,Ge\,O_{1,03}\,N_{1,27}$$

- le composé B contenant un peu d'impureté $GeO_2$ de formule :

$$Cd_{0,54}\,Ge\,O_{1,42}\,N_{0,74}$$

Dans les composés selon l'invention en général, bien que cela ne soit pas limitatif de l'invention, les cations $Cd^{2+}$ et $Ge^{4+}$ occupent la moitié des sites tétraédriques de l'empilement anionique. Il existe deux possibilités pour cette occupation des sites cationiques ;

- pour un rapport Cd/Ge proche de 1, on observe un diagramme quasi identique à celui de la würtzite (cas de CdGeON (A)),
- pour un rapport Cd/Ge > 1, on observe l'apparition de raies de surstructures due à une déformation de la maille orthorhombique (cas de CdGeON (B)).

La variation de la composition se traduit par une variation des paramètres de maille a et b. Une diminution de a entraîne l'augmentation de b, de façon à conserver un volume de maille sensiblement constant de l'ordre de 208 $Å^3$.
Ainsi : 5,60 Å < a < 5,75 Å
6,80 Å < b < 6,85 Å.
Le paramètre c n'est pas affecté par cette variation.
L'invention est maintenant illustrée par les exemples suivants donnés à titre indicatif et non limitatif :

Exemple 1

Préparation des oxydes de cadmium et de germanium

Selon un mode opératoire général :

- une solution contenant l'ion $Cd^{2+}$ réalisée par dissolution de 10g de l'oxyde commercial CdO dans 400 cc d'eau distillée et 20 cc d'HCl concentré.
- et une solution contenant l'ion $Ge^{4+}$, réalisée par dissolution de 3 g de l'oxyde de germanium $GeO_2$ dans 1,5 l d'eau distillée de façon à obtenir le rapport Cd/Ge souhaité, puis filtration éventuelle du $GeO_2$ rutile insoluble.

Les solutions sont mélangées à chaud et traitées par l'ammoniaque.
On recueille un précipité. On laisse décanter, on lave à l'eau bouillante et à l'éthanol. On élimine le surnageant, on lave à l'éthanol puis on centrifuge.
La pâte est récupérée dans un cristallisoir et séchée à l'étuve.
Après broyage et tamisage à environ 200 micromètres, on obtient une poudre que l'on identifie par rayons X (figure 1, Cd/Ge = 3).
Le tableau ci-dessous montre l'évolution des surfaces spécifiques en fonction du rapport Cd/Ge.
r = Cd/Ge
S.S = surface spécifique ($m^2/g$).

TABLEAU I

| r | 1 | 2 | 3 | 4 |
|---|---|---|---|---|
| S.S | 22 | 79 | 71 | 90 |

Exemple 2

Préparation de l'oxynitrure de germanium et de cadmium

La réaction de nitruration est effectuée au moyen d'un appareillage connu.
L'échantillon est disposé dans un four et soumis à un débit gazeux de $NH_3$ de façon à ce que la dissociation de l'ammoniac en azote et hydrogène se produise dans la zone isotherme où se situe l'échantillon.
Le tableau II ci-après reprend les différents composés obtenus avec leurs caractéristiques et leurs conditions d'obtention.

TABLEAU II

| | Composition | Surface spécifique $Cd_2GeO_4$ ($m^2/g$) | Température de synthèse (°C) | Durée (h) de synthèse | Surface spécifique CdGeON ($m^2/g$) |
|---|---|---|---|---|---|
| 1 | $Cd_{0,83}GeO_{0,87}N_{1,31}$ | 60 | 580 | 6 | 6 |
| 2 | $Cd_{0,92}GeO_{0,84}N_{1,38}$ | 70 | 580 | 6 | 15 |
| 3 | $Cd_{0,94}GeO_{1,03}N_{1,27}$ | 71 | 580 | 6 | 16 |
| 4 | $Cd_{0,10}GeO_{1,05}N_{1,29}$ | 56 | 580 | 6 | – |
| 5 | $Cd_{0,70}GeO_{0,93}N_{1,18}$ | 56 | 580 | 10 | 18 |
| 6 | $Cd_{0,58}GeO_{0,77}N_{1,21}$ | 56 | 580 | 15 | 21 |
| 7 | $Cd_{0,54}GeO_{1,30}N_{0,83}$ | 70 | 580 | 24 | – |
| 8 | $Cd_{0,54}GeO_{1,42}N_{0,74}$ | 78 | 600 | 6 | – |

TABLEAU II (Suite)

| | Composition | N/0 | % Cd massique | % N massique | C.E.V. | Teneur en cadmium % | Teneur en azote % |
|---|---|---|---|---|---|---|---|
| 1 | $Cd_{0,83}GeO_{0,87}N_{1,31}$ | 1,51 | 48,2 | 9,5 | 4,34 | 41,3 | 65,3 |
| 2 | $Cd_{0,92}GeO_{0,84}N_{1,38}$ | 1,64 | 47,4 | 8,9 | 4,29 | 45,9 | 69,2 |
| 3 | $Cd_{0,94}GeO_{1,03}N_{1,27}$ | 1,23 | 51,0 | 8,6 | 4,34 | 46,7 | 63,5 |
| 4 | $Cd_{0,10}GeO_{1,05}N_{1,29}$ | 1,23 | 55,3 | 8,8 | 4,32 | 50,0 | 64,5 |
| 5 | $Cd_{0,70}GeO_{0,93}N_{1,18}$ | 1,26 | 44,6 | 9,4 | 4,43 | 34,8 | 58,8 |
| 6 | $Cd_{0,58}GeO_{0,77}N_{1,21}$ | 1,58 | 36,7 | 9,5 | 4,44 | 29,0 | 60,5 |
| 7 | $Cd_{0,54}GeO_{1,30}N_{0,83}$ | 0,64 | 37,0 | 7,0 | 4,64 | 27,0 | 41,5 |
| 8 | $Cd_{0,54}GeO_{1,42}N_{0,74}$ | 0,52 | 38,6 | 6,7 | 4,68 | 26,7 | 37,1 |
| | | | | | | | |

Utilisation des oxynitrures de germanium et de cadmium comme capteurs

On réalise une encre à base de CdGeON que l'on sérigraphie sur un substrat d'alumine sur lequel sont sérigraphiées d'un côté les électrodes d'or et de l'autre une piste conductrice de platine dont le rôle est d'assurer le chauffage de l'ensemble du capteur.
La conductance de l'ensemble des échantillons testés est de l'ordre de $10^{-6}\ \Omega^{-1}$ sous air et $10^{-4}\ \Omega^{-1}$ sous azote à 200°C.

Variation de la conductance

Cette conductance sous l'effet d'un gaz polluant varie proportionnellement à la concentration de gaz interférent. La présence d'un gaz réducteur, tel que $H_2S$ ou $NH_3$, provoque une augmentation de la conductance de base. Au contraire, la présence d'un gaz oxydant, tel que $NO_x$, provoque une diminution de la conductance de base. Après l'introduction du polluant, au bout d'un certain temps la conductance atteint une nouvelle valeur d'équilibre. Lors de la suppression totale du polluant, on observe un retour plus ou moins rapide à $G_0$.
La figure 3 illustre pour un échantillon typique d'oxynitrure de cadmium et de germanium selon l'invention, les variations de conductance lorsqu'on le soumet à l'action de 10 ppm d'$H_2S$ dans l'air, pendant une durée de 5 minutes à une température de 200°C. L'abscisse de la courbe représente le temps en secondes.

. G est la conductance en $10^{-5}\ \Omega^{-1}$,
. au temps t = 300 s on introduit le gaz (A).
. au temps t = 600 s on arrête le gaz polluant (B).

On constate que l'action d'$H_2S$ se traduit par une augmentation de la conductance mesurée et par l'atteinte d'un palier au bout d'un certain temps. L'amplitude de la variation de la conductance ($\Delta G$) dépend de la température de travail utilisée.

Mesure de la sensibilité

On mesure la sensibilité du capteur à 10 ppm d'$H_2S$ dans l'air pour différentes températures.
La sensibilité S à un gaz est définie par :

$$S = \frac{\Delta G}{Go} = \frac{G - Go}{Go}$$

Go = conductance sous air. G = conductance sous gaz réducteur. On mesure la sensibilité du matériau en fonction de la température.
Les expériences sont effectuées :

- sur un capteur monocouche (épaisseur 27 µm)
- sur un capteur double couche (épaisseur 37 µm) et pour chacun à l'obscurité et à la lumière.

Les résultats sont rassemblés aux figures 4 et 5.
On observe que les capteurs présentent une forte sensibilité à $H_2S$ (jusqu'à 2500 %).
La température de sensibilité maximum est de 200°C.
On a trouvé également que l'injection successive de polluant en concentration croissante conduisait à une augmentation de la sensibilité.
La sensibilité à 5 ppm d'$H_2S$ est encore très significative et varie de 400 à 800 % en fonction de l'épaisseur du capteur.
Le seuil de détection est d'environ 1 ppm.

**Revendications**

1. Oxynitrure de cadmium et de germanium présentant une structure tétraédrique dérivée de la wûrtzite, ainsi que ses dérivés de même structure dans lesquels le cadmium est partiellement substitué par du zinc ou du manganèse et/ou le germanium est partiellement substitué par de l'étain.

2. Oxynitrures selon la revendication 1, caractérisés en ce qu'ils répondent aux formules :

$$\text{(I)} \qquad Cd_{2-x-\alpha}\, Zn_{\alpha}\, Ge_{1-\beta}\, Sn_{\beta}\, O_{4-x-3y}\, N_{2y}$$

ou

$$\text{(II)} \qquad Cd_{2-x-\alpha}\, Mn_{\alpha}\, Ge_{1-\beta}\, Sn_{\beta}\, O_{4-x-3y}\, N_{2y}$$

dans lesquelles :
$0{,}9 \leq X \leq 1{,}5$
$0{,}3 \leq y \leq 0{,}7$
$0 \leq \alpha \leq 0{,}5$
$0 \leq \beta \leq 0{,}5$ les indices x et $\alpha$ ne pouvant pas prendre simultanément leur valeur maximale de 1,5 et de 0,5 respectivement.

3. Oxynitrures selon l'une des revendications précédentes, caractérisés en ce que la concentration en électrons de valence est supérieure à 4.

4. Oxynitrures selon l'une des revendications précédentes, caractérisés en ce que la conductance ($\Omega$-1) dans l'air à + 200°C est de l'ordre de $10^{-6}$.

5. Oxynitrures selon l'une des revendications précédentes, caractérisés en ce que la conductance ($\Omega$-1) dans l'azote à + 200°C est de l'ordre de $10^{-4}$.

6. Utilisation des oxynitrures selon l'une des revendications 1 à 5, comme catalyseurs.

7. Utilisation des oxynitrures selon l'une des revendications 1 à 5, comme capteurs de gaz.

8. Utilisation des oxynitrures selon la revendication 7, caractérisée en ce que les gaz sont choisis parmi les gaz réducteurs notamment l'ammoniac et les gaz aminés, le gaz sulfureux et les mercaptans.

9. Utilisation des oxynitrures selon la revendication 7, caractérisée en ce que les gaz sont des gaz oxydants, en particulier des oxydes d'azote $NO_x$.

10. Capteur de gaz comprenant un substrat notamment d'alumine, sur lequel a été sérigraphiée une couche d'un oxynitrure de germanium et de cadmium selon l'une des revendications 1 à 5, d'une épaisseur notamment entre 5 et 50 µm, et pourvu d'électrodes et d'un moyen de chauffage.

11. Procédé de préparation d'un oxynitrure de germanium et de cadmium selon l'une des revendications 1 à 5, caractérisé en ce que :

a) on prépare par la voie sol-gel un germanate de cadmium amorphe, le cas échéant partiellement substitué par Zn ou Mn et/ou par Sn,
b) on soumet ledit germanate de cadmium à une réaction de nitruration.

12. Procédé selon la revendication 11, caractérisé en ce qu'on coprécipite une solution acide d'oxyde de cadmium, à laquelle on a ajouté une quantité appropriée d'un sel de zinc ou de manganèse, notamment un nitrate, une solution d'oxyde de germanium éventuellement additionné d'une quantité appropriée d'oxyde d'étain $SnO_2$ en présence d'ammoniaque, le précipité est ensuite lavé et séché.

13. Procédé selon la revendication 12, caractérisé en ce que la proportion molaire $Cd^{2+}/Ge^{4+}$ est supérieure ou égale à 2.

**Patentansprüche**

1. Oxynitrid von Cadmium und Germanium, welches eine von Wurtzit abgeleitete tetraedrische Struktur aufweist, und seine Derivate mit derselben Struktur, in denen das Cadmium teilweise durch Zink oder durch Mangan substituiert ist und/oder das Germanium teilweise durch Zinn substituiert ist.

2. Oxynitride nach Anspruch 1, dadurch charakterisiert, daß sie den Formeln entsprechen:

$$\text{(I)} \qquad Cd_{2-x-\alpha}\, Zn_{\alpha}\, Ge_{1-\beta}\, Sn_{\beta}\, O_{4-x-3y}\, N_{2y}$$

oder

$$\text{(II)} \qquad Cd_{2-x-\alpha}\, Mn_{\alpha}\, Ge_{1-\beta}\, Sn_{\beta}\, O_{4-x-3y}\, N_{2y}$$

wobei:
$0{,}9 \le X \le 1{,}5$
$0{,}3 \le Y \le 0{,}7$
$0 \le \alpha \le 0{,}5$
$0 \le \beta \le 0{,}5$ wobei die Indices X und $\alpha$ nicht gleichzeitig jeweils ihren Maximalwert von 1,5 und 0,5 annehmen können.

3. Oxynitride nach einem der vorstehenden Ansprüche, dadurch charakterisiert, daß die Konzentration an Valenzelektronen größer als 4 ist.

4. Oxynitride nach einem der vorstehenden Ansprüche, dadurch charakterisiert, daß die Leitfähigkeit ($\Omega$-1) in Luft bei + 200°C in der Größenordnung von $10^{-6}$ liegt.

5. Oxynitride nach einem der vorstehenden Ansprüche, dadurch charakterisiert, daß die Leitfähigkeit ($\Omega$-1) in Stickstoff bei 200°C in der Größenordnung von $10^{-4}$ liegt.

6. Verwendung von Oxynitriden nach einem der Ansprüche 1 bis 5 als Katalysatoren.

7. Verwendung von Oxynitriden nach einem der Ansprüche 1 bis 5 als Gasfänger.

8. Verwendung von Oxynitriden nach Anspruch 7, dadurch charakterisiert, daß die Gase ausgewählt werden aus reduzierenden Gasen, insbesondere Ammoniak und aminhaltigen Gasen, schwefelhaltigen Gasen und Mercaptanen.

9. Verwendung von Oxynitriden nach Anspruch 7, dadurch charakterisiert, daß die Gase oxidierende Gase sind, insbesondere Stickoxide $NO_x$.

10. Gasfänger, umfassend ein Substrat, insbesondere aus Aluminium, auf das eine Schicht eines Oxynitrids aus Germanium und Cadmium nach einem der Ansprüche 1 bis 5 mit einer Dicke insbesondere zwischen 5 und 50 µm durch Siebdruck aufgebracht ist, und das mit Elektroden und einer Heizmittel versehen ist.

11. Verfahren zur Herstellung eines Oxynitrids von Germanium und Cadmium nach einem der Ansprüche 1 bis 5, dadurch charakterisiert, daß

    a) man mit dem Sol-Gel-Prozeß ein amorphes Cadmiumgermanat herstellt, gegebenenfalls partiell substituiert durch Zn oder Mn und/oder Sn,
    b) man dieses Cadmiumgermanat einer Nitridierungsreaktion unterzieht.

12. Verfahren nach Anspruch 11, dadurch charakterisiert, daß man eine saure Cadmiumoxid-Lösung, zu der man eine geeignete Menge eines Salzes von Zink oder Mangan gegeben hat, insbesondere eines Nitrates, eine Lösung von Germaniumoxid, gegebenenfalls versetzt mit einer geeigneten Menge Zinnoxid $SnO_2$ in Gegenwart von Ammoniak copräzipitiert, und der Niederschlag anschließend gewaschen und getrocknet wird.

**13.** Verfahren nach Anspruch 12, dadurch charakterisiert, daß das molare Verhältnis $Cd^{2+}/Ge^{4+}$ größer oder gleich 2 ist.

## Claims

**1.** Cadmium and germanium oxynitride having a tetrahedral structure derived from wurtzite, and its derivatives of the same structure in which the cadmium is partially substituted with zinc or manganese and/or the germanium is partially substituted with tin.

**2.** Oxynitrides according to Claim 1, characterized in that they satisfy the formulae:

$$\text{(I)} \qquad Cd_{2-x-\alpha}Zn_{\alpha}Ge_{1-\beta}Sn_{\beta}O_{4-x-3y}N_{2y}$$

or

$$\text{(II)} \qquad Cd_{2-x-\alpha}Mn_{\alpha}Ge_{1-\beta}Sn_{\beta}O_{4-x-3y}N_{2y}$$

in which:
$0.9 \leq x \leq 1.5$
$0.3 \leq y \leq 0.7$
$0 \leq \alpha \leq 0.5$
$0 \leq \beta \leq 0.5$ it not being possible for the indices x and $\alpha$ to simultaneously take their maximum values of 1.5 and 0.5, respectively.

**3.** Oxynitrides according to one of the preceding claims, characterized in that the concentration of valence electrons is greater than 4.

**4.** Oxynitrides according to one of the preceding claims, characterized in that the conductance (in $\Omega^{-1}$) in air at +200°C is about $10^{-6}$.

**5.** Oxynitrides according to one of the preceding claims, characterized in that the conductance (in $\Omega^{-1}$) in nitrogen at +200°C is about $10^{-4}$.

**6.** Use of the oxynitrides according to one of Claims 1 to 5 as catalysts.

**7.** Use of the oxynitrides according to one of Claims 1 to 5 as gas sensors.

**8.** Use of the oxynitrides according to Claim 7, characterized in that the gases are chosen from reducing gases, especially ammonia and amine-containing gases, sour gas and mercaptans.

**9.** Use of the oxynitrides according to Claim 7, characterized in that the gases are oxidizing agents, particularly nitrogen oxides $NO_x$.

**10.** Gas sensor comprising a substrate, especially an alumina substrate, on which a layer of a cadmium and germanium oxynitride according to one of Claims 1 to 5, especially with a thickness of between 5 and 50 µm, has been screen-printed and provided with electrodes and with a heating means.

**11.** Process for preparing a cadmium and germanium oxynitride according to one of Claims 1 to 5, characterized in that:

a) an amorphous cadmium germanate, if required partially substituted with Zn or Mn and/or with Sn, is prepared by the sol-gel technique;
b) the said cadmium germanate is made to undergo a nitriding reaction.

**12.** Process according to Claim 11, characterized in that an acid solution of cadmium oxide, to which a suitable amount of a zinc or manganese salt, especially a nitrate, has been added, a solution of germanium oxide, to which a

suitable amount of tin oxide $SnO_2$, may have been added, are co-precipitated in the presence of aqueous ammonia, the precipitate then being washed and dried.

**13.** Process according to Claim 12, characterized in that the $Cd^{2+}/Ge^{4+}$ molar ratio is greater than or equal to 2.

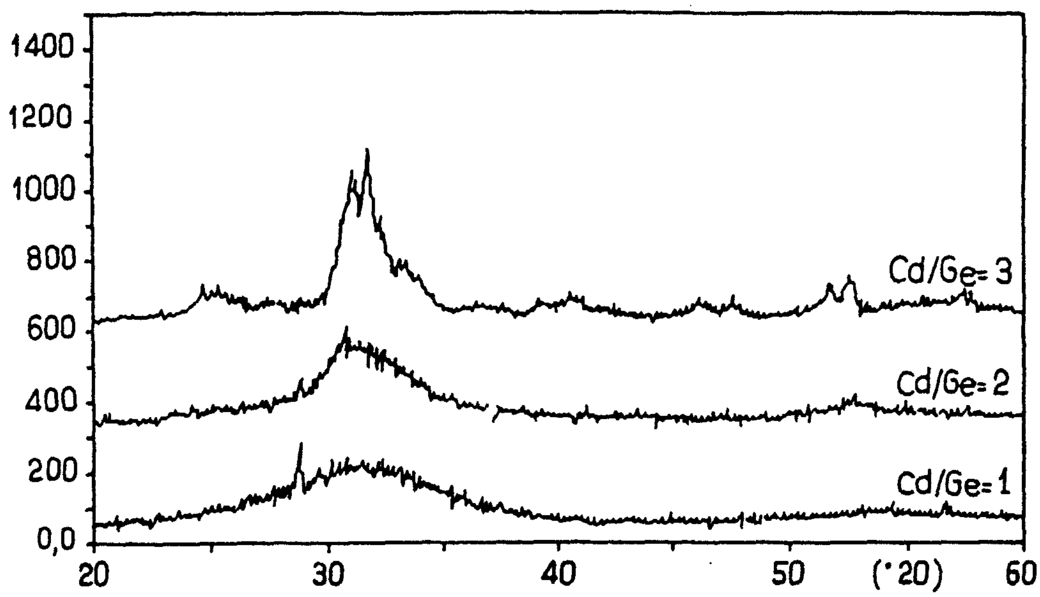
1400
1200
1000
800
600
400
200
0,0
20
30
40
50
(°2θ)
60
Cd/Ge= 3
Cd/Ge= 2
Cd/Ge= 1

FIG.1

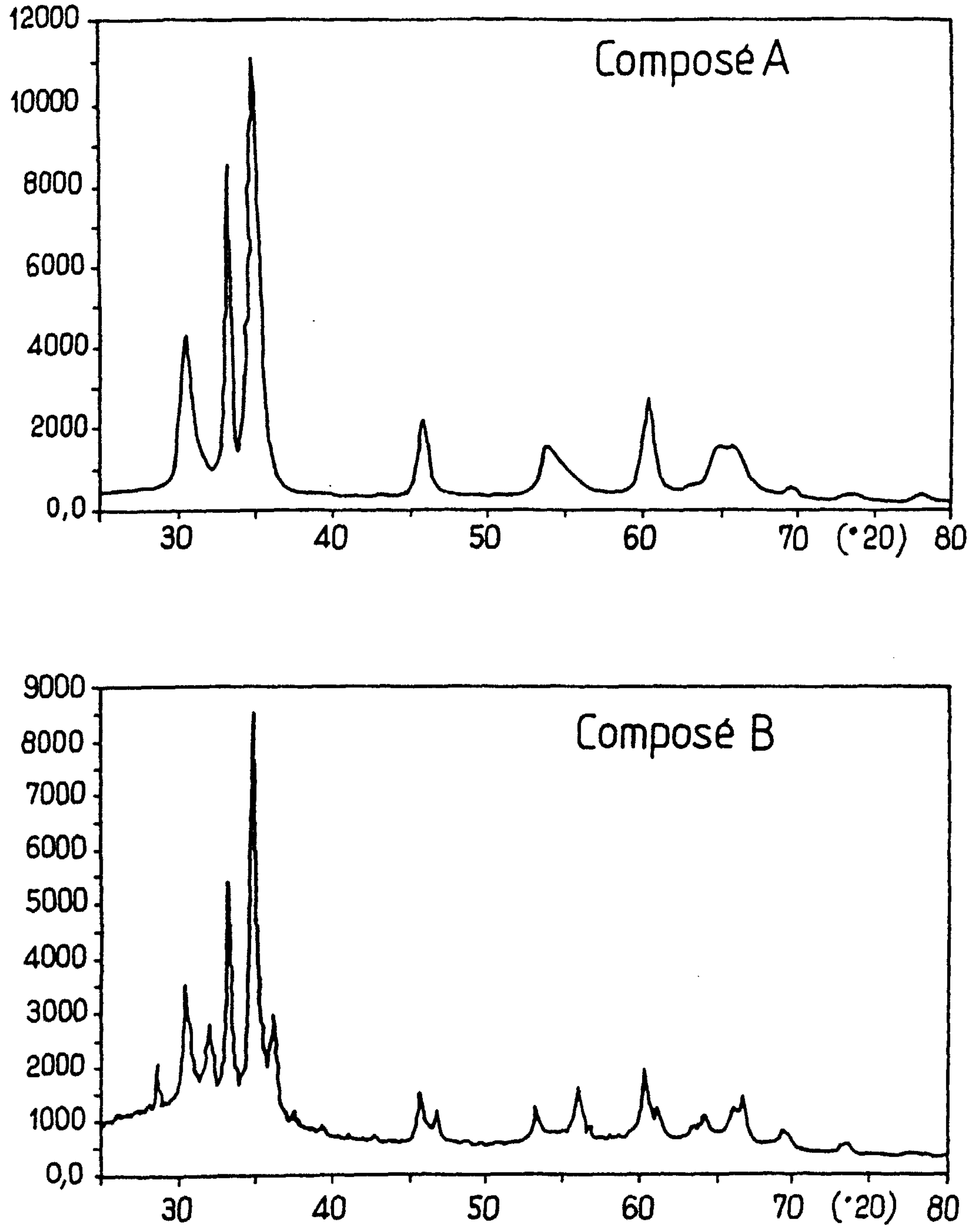
12000
10000
8000
6000
4000
2000
0,0
30
40
50
60
70
(°2θ)
80
Composé A
9000
8000
7000
6000
5000
4000
3000
2000
1000
0,0
30
40
50
60
70
(°2θ)
80
Composé B

FIG_2

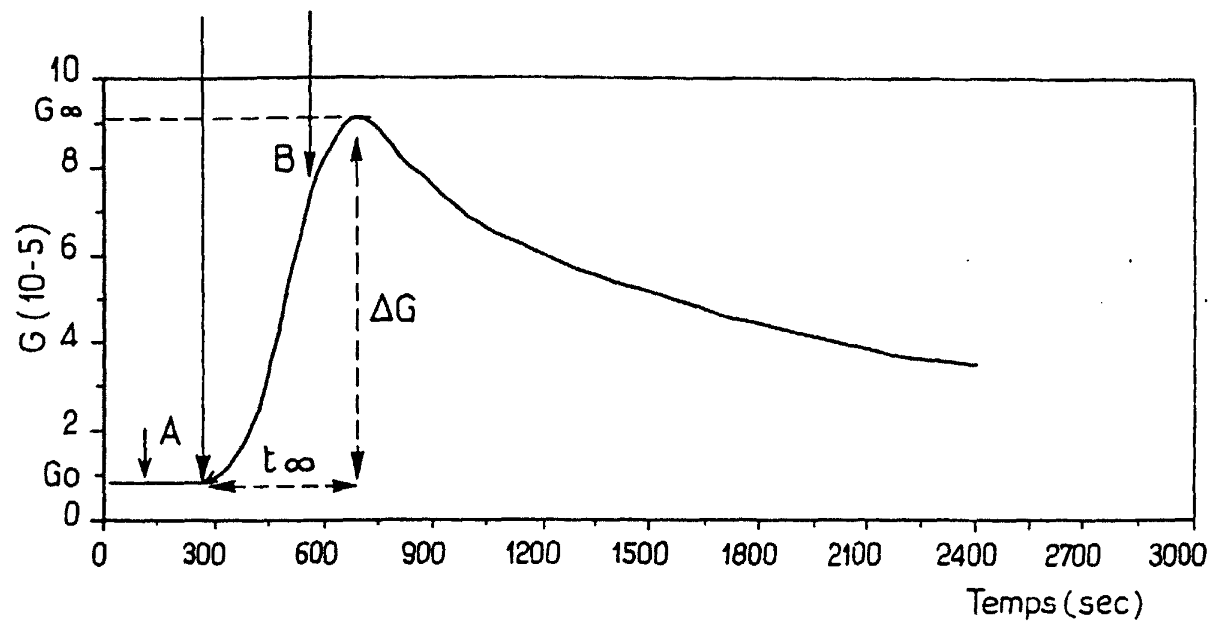
10
G∞
8
6
4
2
Go
0
G (10-5)
B
A
ΔG
t∞
0
300
600
900
1200
1500
1800
2100
2400
2700
3000
Temps (sec)

FIG.3

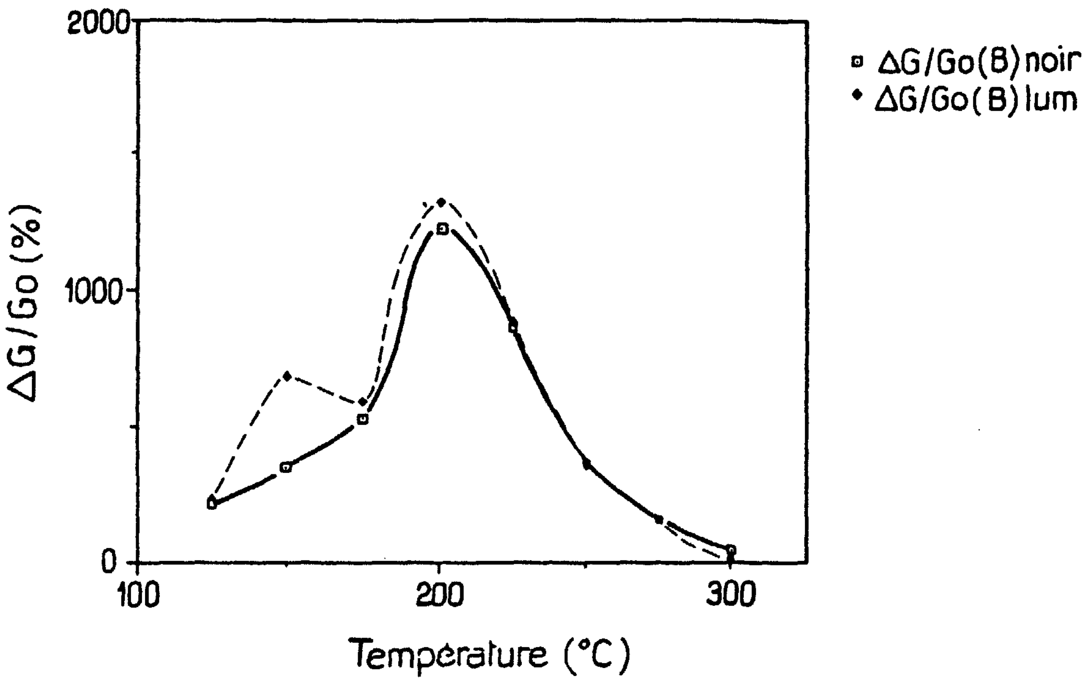
2000
1000
0
ΔG/Go (%)
100
200
300
Température (°C)
ΔG/Go(B) noir
ΔG/Go(B) lum

FIG_4

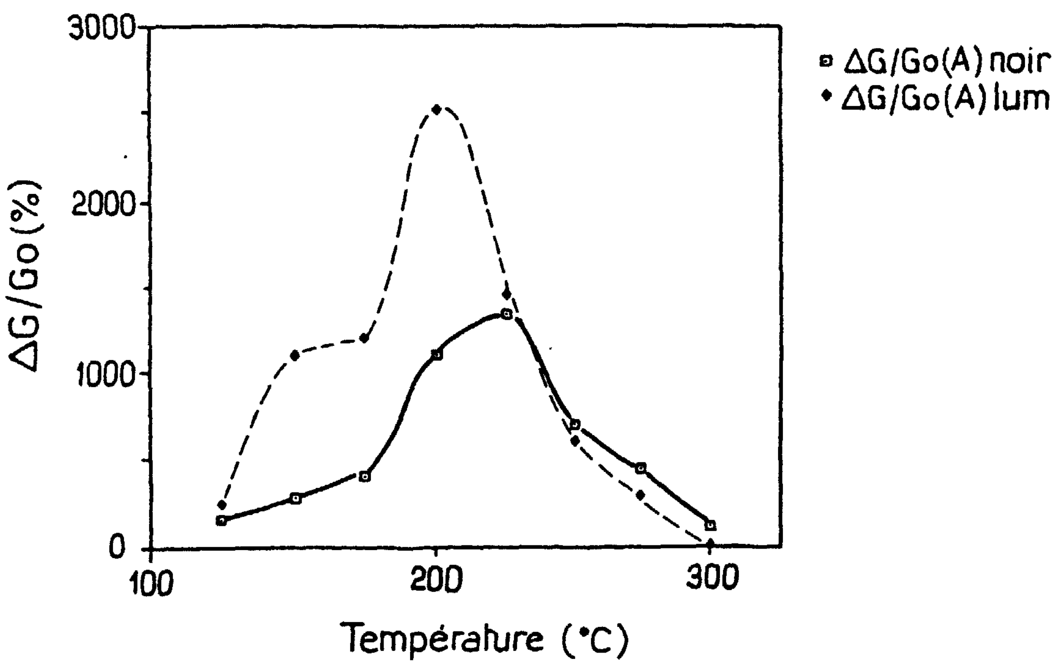
3000
2000
1000
0
ΔG/Go (%)
100
200
300
Température (°C)
ΔG/Go(A) noir
ΔG/Go(A) lum

FIG_5